# EUROPEAN PATENT APPLICATION

(11) **EP 3 156 332 A2**
(43) Date of publication of application: **19.04.2017**
(21) Application number: 16190863.7
(22) Date of filing: 27.09.2016
(51) Int. Cl.: B64D 17/00

(54) **A PARACHUTE**

(30) Priority: 16.10.2015 GB 201518333
(71) Applicant: MARTIN-BAKER AIRCRAFT CO. LTD., Nr. Uxbridge, Middlesex UB9 5AJ (GB)
(72) Inventor: GODDARD, Julie, Middlesex UB9 5AJ (GB); ELSON, Mark, Middlesex UB9 5AJ (GB)
(74) Representative: Harding, Andrew Philip

(57) **Abstract**

A parachute (10) comprising:
a canopy (4);
a plurality of risers (11) connected at each of their respective first ends to the canopy (4) and connectable at each of their respective second ends to a harness (15); and
a panel (20) extending between at least two of the plurality of risers,
configured such that when the parachute is deployed, a user's head (21) is positioned generally between the plurality of risers (11) and the panel is arranged behind the user's head (21) to provide support thereto.

## Description

The present invention relates to a parachute and particularly to an ejection seat comprising a parachute. The present invention further provides a chin support pad.

As a parachute is initially deployed, the air resistance increases, causing deceleration of the user. The deceleration forces can be controlled to some extent by the use of a conventional slider. However, there is often a need for rapid deceleration, particularly in emergency situations or where the user's initial velocity is high. High deceleration can potentially cause injury to the user's neck, where the neck muscles are unable to withstand the force put on them by the inertial forces caused by the user's relatively heavy head. The force can cause the user's head to be forced backwards (hyperextension) or forwards (hyperflexion) relative to the user's torso, depending on the position of the user's head when the force is first applied. Excessive hyperextension or hyperflexion can cause significant injury.

During ejection from an aircraft, a parachute is deployed shortly after the pilot has cleared the vicinity of the aircraft, at or around the same time as the pilot separates from the ejection seat. It is often necessary to deploy the parachute as quickly as possible. At this point, the pilot could potentially be in a non-vertical orientation, not in full contact with the seat (out of position), travelling at a relatively high horizontal velocity, and/or not facing the direction of travel. The high deceleration forces, coupled with the awkward position of the pilot, increases the chances of excessive hyperextension or hyperflexion. The problems are compounded when the pilot is wearing a helmet, which may be provided with additional equipment (vision systems, sensors, breathing equipment etc). This increases the mass of the user's head and thus increases the forces imposed on a pilot's neck during parachute deployment, further increasing the risk of injury.

The present invention seeks to address these problems.

Accordingly, the present invention provides a parachute comprising: a canopy;
a plurality of risers connected at each of their respective first ends to the canopy and connectable at each of their respective second ends to a harness; and a panel extending between at least two of the plurality of risers,
configured such that when the parachute is deployed, a user's head is positioned generally between the plurality of risers and the panel is arranged behind the user's head to provide support thereto.

Preferably, the first and second risers are front risers connectable to a harness generally forward and either side of a user's head, and the third and fourth risers are rear risers connectable to a harness generally behind and either side of a user's head, wherein the panel extends between the third and fourth rear risers.

Preferably, the panel is sized so as to extend from a point below or generally in line with the base of a user's head to a point above or generally in line with the top of a user's head.

Preferably, the panel is flexible. Preferably, the panel is made of fabric. Preferably, the panel is removable. Preferably, the position of the panel with respect to the risers is adjustable.

Preferably, the parachute further comprises a harness.

Preferably, the canopy is connected to the risers via suspension lines.

Preferably, the parachute forms part of an ejection seat comprising a head rest.

Preferably, the canopy and at least part of the risers are stowed in the ejection seat prior to deployment.

Preferably, when the canopy is stowed, the panel is arranged to extend across at least part of the surface of the headrest, such that it is positioned between the headrest and the user's head.

Preferably, the panel is removably secured to the surface of the head rest.

The present invention further provides a chin support pad securable between a user's chin and chest.

Preferably, the chin support pad is secured to the user's chest.

Preferably, there is provided a helmet comprising a main helmet body and a chin strap, further comprising a chin support pad, wherein the chin support pad is secured to the chin strap, arranged between the chin strap and the user's chest in use.

Embodiments of the present invention will now be described, by way of example only, with reference to the accompanying figures in which:
FIGURE 1 illustrates a pilot having ejected from an aircraft, still attached to the ejection seat, in the initial phase of parachute deployment.
FIGURE 2 illustrates the pilot separating from the ejection seat and deployment of the parachute.
FIGURE 3 illustrates a perspective view of part of a parachute according to the claimed invention.
FIGURE 4 illustrates a rear view of the arrangement shown in Figure 3.
FIGURE 5 illustrates a side view of the arrangement shown in Figure 3.
FIGURE 6 illustrates a perspective view of part of a parachute according to another embodiment of the claimed invention.
FIGURE 7 illustrates a perspective view of part of a parachute according to another embodiment of the claimed invention.
FIGURE 8 illustrates a chin support pad according to the present invention.

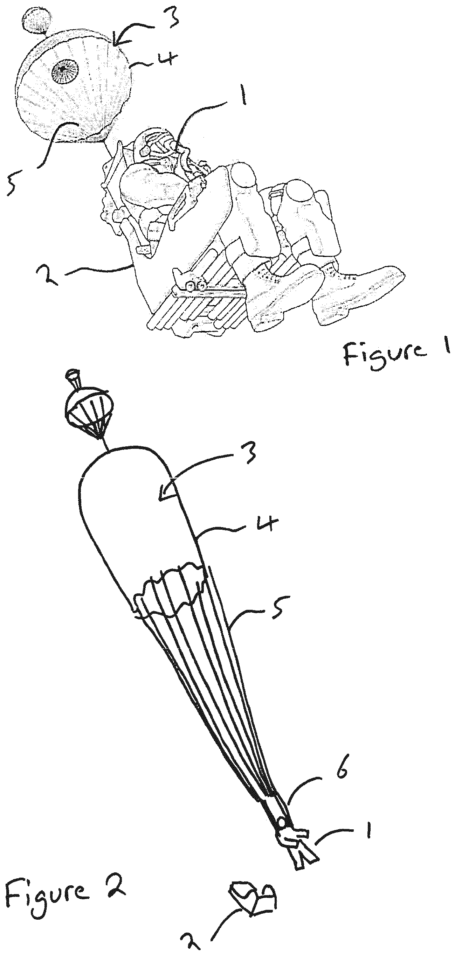

Figure 1 illustrates a user (pilot) 1 seated in an ejection seat 2 having ejected from an aircraft (not shown). The user 1 is secured to the ejection seat 2 by a connection such a harness. Preferably, the user 1 is wearing a body harness which is separately secured to the seat 2. A parachute 3 is connected to the harness of the user 1. The parachute 3 comprises a canopy 4 secured to a plurality of suspension lines 5 which are secured to a plurality of risers 6. The risers 6 are secured to the user's 1 harness.

As the parachute 3 is deployed, the user 1 separates from the seat 2, in a known manner, as shown in Figure 2.

As discussed above, as the parachute deploys, the forces imposed on the user's neck can cause injury.

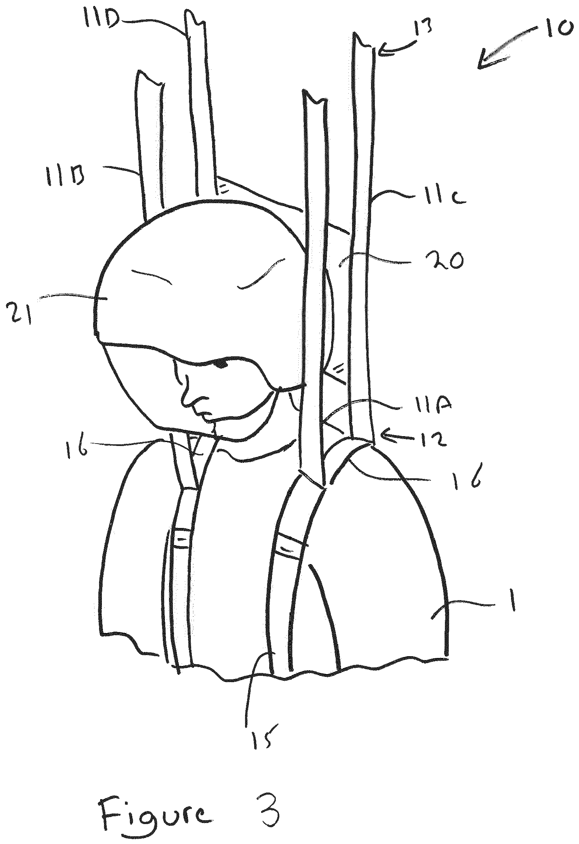

Figure 3 illustrates part of a parachute 10 embodying the present invention. The canopy and suspensions lines are not shown but can take the conventional form of the canopy 4 and suspension lines 5 shown in figures 1 and 2.

The parachute 10 comprises a plurality of risers 11A - 11D. Each of the risers 11A - 11D are connected at each of their respective first ends 13 to a canopy (preferably via suspension lines) in a known manner. The canopy is not shown in Figure 3.

The user 1 is illustrated wearing a harness 15, which may take a conventional form. The harness 15 comprises two straps 16 which pass over the user's shoulders. The straps 16 may be attached to a waist strap and/or buckles as known in the art. The form of the harness 15 is not relevant.

Each of the risers 11A - 11D are connected at each of their respective second ends 12 to the harness straps 16.

Risers 11 A and 11 B are front risers which are connected to the harness straps 16 generally forward and either side of the user's head 21. Riser 11A is attached to one harness strap 16 and riser 11B is attached to the other harness strap 16.

Risers 11C and 11D are rear risers which are connected to the harness straps 16 generally behind and either side of the user head 21. Riser 11C is attached to one harness strap 16 and riser 11D is attached to the other harness strap 16.

The second ends 12 of each of the risers 11A - 11D are spaced from one another.

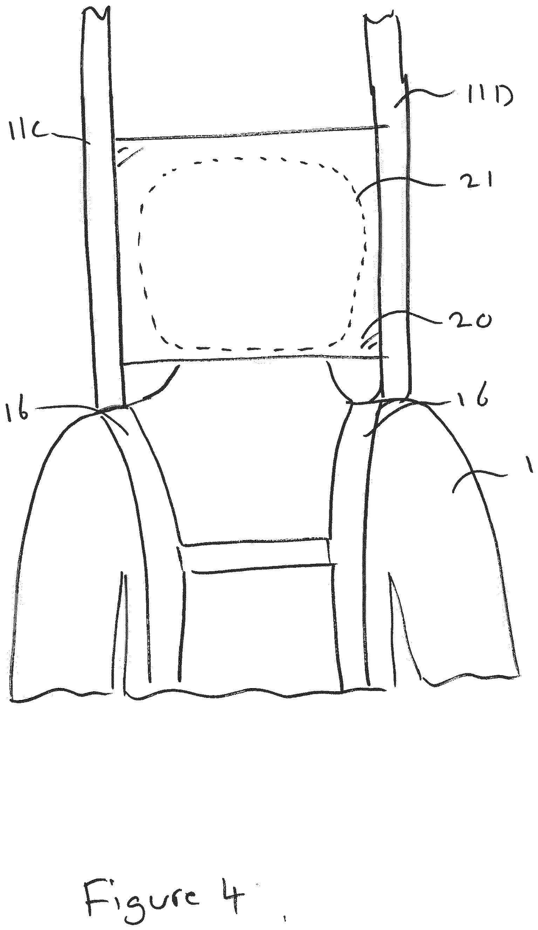

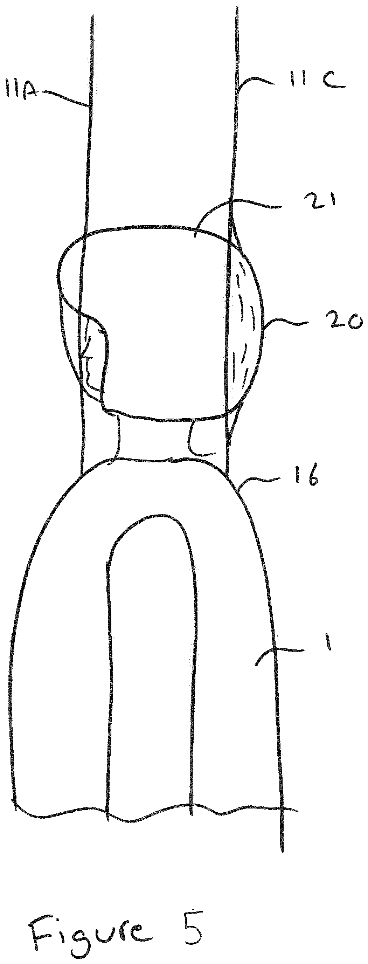

The parachute 10 further comprises a panel 20 which extends between the third 11C and fourth 11D rear risers. The panel 20 is positioned such that when the parachute 10 is deployed, a user's head 21 is positioned generally between the plurality of risers 11A - 11D and the panel 20 is arranged behind the user's head 21 to provide support thereto. This is further illustrated in Figures 4 and 5.

The panel 20 is preferably sized so as to extend from a point below or generally in line with the base of a user's head 21 to a point above or generally in line with the top of a user's head 21.

Preferably, the panel 20 is rectangular, having four corners. Two adjacent corners are attached to the third riser 11C, at a distance from one another, and the other two adjacent corners are attached to the fourth riser 11D, at a distance from one another. Accordingly, the panel 20 is attached to the third riser 11C in two locations and to the fourth riser 11D in two locations. Alternatively, the panel 20 may be connected to the third riser 11C along substantially all of one edge of the panel 20 and connected to the fourth riser 11D along substantially all of an opposing edge of the panel. The edges of the panel adjacent the riser 11C, 11D may be wrapped around the riser 11C, 11D and stitched in place. Relative movement between the panel 20 and the riser 11C, 11D may be substantially prevented or allowed at least to a predetermined extent.

The panel 20 may be smaller in height than illustrated in the figures, representing a 'strip' which is positioned to capture the central point of a user's head 21.

The panel 20 is preferably flexible, such as fabric. The fabric may be a mesh to allow air to pass through. The fabric may be resilient. The panel may be rigid or stiff.

The position of the panel 20 along the risers 11A - 11D may be adjustable, so that it can be sized to the user 1 or the type of ejection seat with which it will be used. The panel 20 may be removable.

The panel 20 may extend between three of the risers 11A - 11D. For example, the panel 20 may extend between riser 11B and riser 11D; riser 11D and riser 11C; and riser 11C and 11A, such that the panel 20 envelopes the user's head 21 on three sides. This is to prevent the user's head overextending to the side as well as hyperextending.

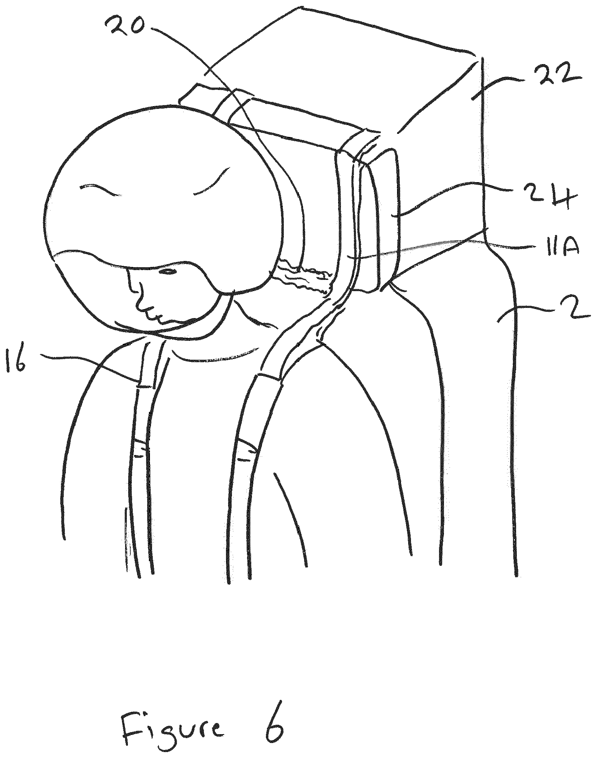

Figure 6 illustrates the user 1 seated in an ejection seat 2, which is preferably of conventional form. The seat 2 comprises a headrest 24 attached to or arranged in front of a headbox 22 in which the canopy 4 is stowed. The risers 11A - 11D are illustrated trailing from the harness 16. The panel 20 is shown in a stowed form, behind the user's head 21. When the parachute is deployed, and the risers 11A - 11D extend, the panel 20 will take the position as illustrated in Figure 1.

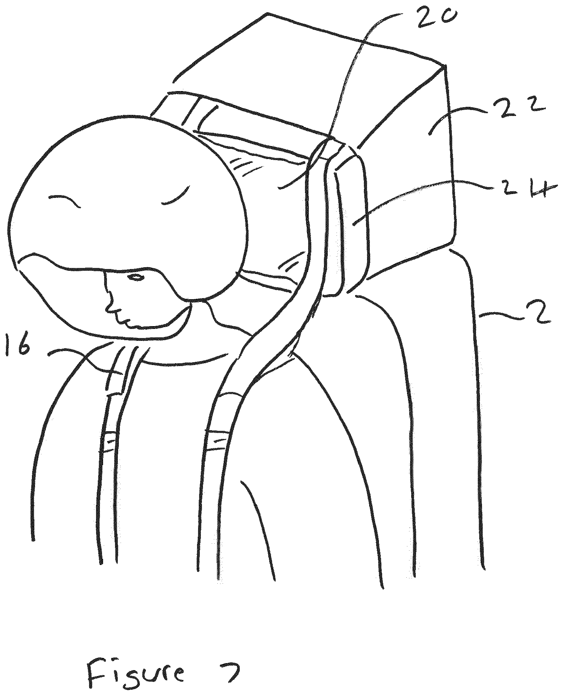

Figure 7 illustrates an alternative arrangement to Figure 6, in which when the canopy 4 is stowed, the panel 20 is arranged to extend across at least part of the front surface of the headrest 24, such that it is positioned between the headrest 24 and the user's head 21. This arrangement ensures that, as the parachute 10 is deployed, the panel 20 is in the optimal position to ensure that the pilot's head is supported by the panel 20 upon deployment.

Preferably, the panel 20 is removably securable to the surface of the head rest 24, for example using Velcro™. This ensures that the panel 20 remains in place during normal use of the seat and does not snag or dislodge. Alternatively or additionally, the rear surfaces of some or all of the risers 11A - 11D may be removably securable to the headrest 24.

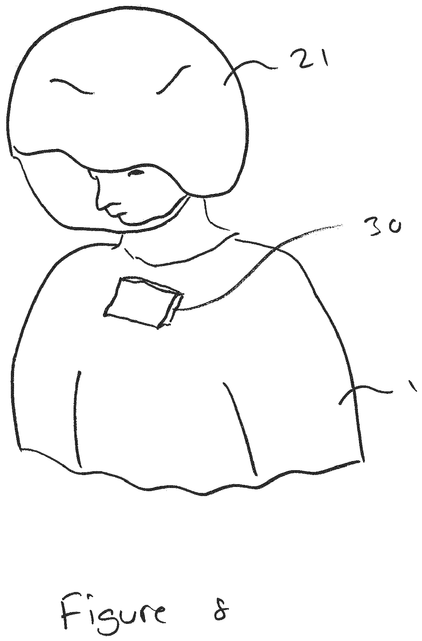

Figure 8 illustrate a chin support pad 30 which may be used with or separately to the parachute 10 described above.

The chin support pad 30 comprises a pad securable between the user's chin and chest. In Figure 8, the chin support pad 30 is shown connected to the user's chest. The pad 30 may be formed as part of the user's undergarment, clothes, life vest, harness etc. Alternatively, the pad 30 may be secured to the base of the helmet's chin strap. The result would be the same, in that the pad would be positioned between the user's chin and chest.

The pad 30 serves to limit the extent of hyperflexion of a user's head 21. Preferably, the pad 30 is cushioned and/or resilient, to reduce the risk of injury to the user's chin or chest.

The dimensions of the pad 30 are preferably such that they do not restrict normal movement of the user. In addition to helping to reduce hyperflexion during parachute deployment, the pad 30 also serves the reduce hyperflexion during the ejection phase of the ejection seat from the cockpit.

An embodiment comprising four risers 11A - 11C is shown in the figures. In another embodiment (not shown), there may be two risers, and the panel extends between the two risers, comparable to the arrangement shown in the figures but without the first 11A and second 11B risers.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A parachute comprising:
a canopy;
a plurality of risers connected at each of their respective first ends to the canopy and connectable at each of their respective second ends to a harness; and
a panel extending between at least two of the plurality of risers,
configured such that when the parachute is deployed, a user's head is positioned generally between the plurality of risers and the panel is arranged behind the user's head to provide support thereto.

2. A parachute according to claim 1 comprising four risers, wherein the first and second risers are front risers connectable to a harness generally forward and either side of a user's head, and the third and fourth risers are rear risers connectable to a harness generally behind and either side of a user's head, wherein the panel extends between the third and fourth rear risers.

3. A parachute according to any preceding claim, wherein the panel is sized so as to extend from a point below or generally in line with the base of a user's head to a point above or generally in line with the top of a user's head.

4. A parachute according to any preceding claim, wherein the panel is flexible, preferably wherein the panel is made of fabric.

5. A parachute according to any preceding claim, wherein the panel is removable.

6. A parachute according to any preceding claim, wherein the position of the panel with respect to the risers is adjustable.

7. A parachute according to any preceding claim, further comprising a harness.

8. A parachute according to any preceding claim, wherein the canopy is connected to the risers via suspension lines.

9. An ejection seat comprising a parachute according to any preceding claim.

10. An ejection seat according to claim 9, further comprising a head rest.

11. An ejection seat according to claim 10, wherein the canopy and at least part of the risers are stowed in the ejection seat prior to deployment.

12. An ejection seat according to claim 11, wherein when the canopy is stowed, the panel is arranged to extend across at least part of the surface of the headrest, such that it is positioned between the headrest and the user's head, preferably wherein the panel is removably secured to the surface of the head rest.

13. A chin support pad securable between a user's chin and chest.

14. A chin support according to claim 13, where the chin support pad is secured to the user's chest

15. A helmet comprising a main helmet body and a chin strap, further comprising the chin support pad according to claim 13, wherein the chin support pad is secured to the chin strap, arranged between the chin strap and the user's chest in use.
